# EUROPEAN PATENT APPLICATION

(11) **EP 4 844 549 A1**
(43) Date of publication of application: **25.11.2026**
(21) Application number: 26179316.0
(22) Date of filing: 18.05.2026
(51) Int. Cl.: G06F 3/044, G06F 3/041, G06F 3/046, G06F 3/0354

(54) **SENSOR AND ELECTRONIC DEVICE INCLUDING THE SAME**

(30) Priority: 16.05.2025 KR 20250063801; 08.05.2026 KR 20260083212
(71) Applicant: Hideep Inc., Seongnam-si, Gyeonggi-do 13493 (KR)
(72) Inventor: KIM, Seyeob, 13493 Seongnam-si (KR); SHIN, Hyong Cheol, 13493 Seongnam-si (KR); CHO, Young ho, 13493 Seongnam-si (KR)
(74) Representative: HGF

(57) **Abstract**

A sensor (100) according to an embodiment of the present disclosure includes a plurality of electrode patterns (101, 102, 103, 104) overlapping with an active area (AA) of a display panel (600) and extending in a first direction (x) and a second direction (y), and at least one edge electrode pattern (101e, 102e, 103e, 104e, 105e) arranged so as to overlap with a non-active area (NAA). In some embodiments, a double routing wiring structure is adopted in which both ends of the electrode pattern (101', 103') are directly electrically connected to a controller, thereby omitting some of the electrode patterns that indirectly transmit signals via coupling capacitance, and is configured to receive a pen sensing signal directly induced in the electrode. By strategically arranging the at least one edge electrode pattern in the non-active area (NAA), stylus pen sensing sensitivity at an edge portion of the active area (AA) can be effectively improved. In addition, by utilizing the double routing wiring structure, an indirect induction electrode is omitted, thereby simplifying a wiring structure inside the sensor (100) and improving touch and pen sensing efficiency.

## Description

### BACKGROUND

The present disclosure relates to a touch sensor and a stylus pen sensor technology, and more particularly, to a sensor which is arranged on a display panel and senses a touch position of a conductive object and a signal of a stylus pen, in which an edge electrode pattern is provided to improve edge sensitivity and simplify an electrode wiring structure, and to an electronic device including the same.

A sensor of a general electronic device is overlapped with a display panel and senses touch and pen signals through a plurality of electrode patterns. In the conventional manner, when sensing a pen signal emitted from an external stylus pen, there is a problem in that the sensing sensitivity at the edge portion (or edge part) of the active area is relatively lower than that at the central portion. This is because no electrode pattern for receiving the signal of the sensor is separately arranged in the non-active area of the display panel.

### SUMMARY

Some embodiments of the present disclosure provide a sensor structure capable of effectively improving the stylus pen signal sensing sensitivity at the edge portion of the active area AA by strategically arranging edge electrode patterns in the non-active area NAA of the sensor.

Furthermore, by omitting some of the electrode patterns that indirectly transmit signals via coupling capacitance and adopting a double routing wiring structure, some embodiments of the present disclosure can simplify the wiring structure of the sensor electrodes and at the same time improve touch and pen sensing efficiency.

According to an aspect of the present disclosure, there is provided a sensor that includes a plurality of electrode patterns arranged so as to overlap with an active area of a display panel, and is controlled by a controller to sense a touch of a conductive object and a pen signal emitted from an external stylus pen. The sensor comprises: a first electrode pattern overlapping with the active area and extending along a first direction, and a second electrode pattern arranged adjacent to the first electrode pattern; a third electrode pattern overlapping with the active area and extending along a second direction crossing the first direction, and a fourth electrode pattern arranged adjacent to the third electrode pattern; and at least one edge electrode pattern arranged so as to overlap with a non-active area of the display panel and formed adjacent to an edge of the active area.

In some embodiments, the at least one edge electrode pattern includes at least one of: a first edge electrode pattern arranged so as to overlap with the non-active area and configured to surround a remaining portion excluding the lower end of the active area; a second edge electrode pattern extending along the first direction and arranged adjacent to the left end and the right end of the active area, in which the other end of the both ends is electrically connected to the other ends of the plurality of second patterns; a third edge electrode pattern extending along the second direction and arranged adjacent to the upper end of the active area; a fourth edge electrode pattern extending along the second direction and arranged adjacent to the third edge electrode pattern; and a fifth edge electrode pattern extending in the second direction adjacent to the lower end of the active area. In some embodiments, the pen signal from the stylus pen is directly induced in the first edge electrode pattern, and the pen sensing signal induced in the fourth edge electrode pattern is configured to be transmitted to the third edge electrode pattern by coupling capacitance.

In some embodiments, the at least one edge electrode pattern includes at least one of: a first edge electrode pattern that is arranged so as to overlap with the non-active area and includes a first left edge electrode pattern and a first right edge electrode pattern arranged divided one each adjacent to the left end and the right end of the active area; a second edge electrode pattern extending along the first direction and arranged adjacent to the left end and the right end of the active area, in which the other end of the both ends is electrically connected to the other ends of the plurality of second patterns; a third edge electrode pattern extending along the second direction and arranged adjacent to the upper end of the active area; a fourth edge electrode pattern extending along the second direction and arranged adjacent to the third edge electrode pattern; and a fifth edge electrode pattern extending in the second direction adjacent to the lower end of the active area. In some embodiments, the pen sensing signal induced in the second edge electrode pattern is transmitted to the first edge electrode pattern by coupling capacitance, and the pen sensing signal induced in the fourth edge electrode pattern is configured to be transmitted to the third edge electrode pattern by coupling capacitance.

According to another aspect of the present disclosure, there is provided a sensor that includes a plurality of electrode patterns arranged so as to overlap with an active area of a display panel, and is controlled by a controller to sense a touch of a conductive object and a pen signal emitted from an external stylus pen. The sensor comprises: a first electrode pattern overlapping with the active area and extending along a first direction, and a second electrode pattern arranged adjacent to the first electrode pattern; a third electrode pattern overlapping with the active area and extending along a second direction crossing the first direction; and at least one edge electrode pattern arranged so as to overlap with a non-active area of the display panel and formed adjacent to an edge of the active area, wherein the third electrode pattern has a double routing wiring structure in which both ends thereof are each directly electrically connected to the controller.

In some embodiments, the at least one edge electrode pattern includes at least one of: the first edge electrode pattern arranged so as to overlap with the non-active area and configured to surround a remaining portion excluding the lower end of the active area; a second edge electrode pattern extending along the first direction and arranged adjacent to the left end and the right end of the active area, in which the other end of the both ends is electrically connected to the other ends of the plurality of second patterns; a third edge electrode pattern arranged so as to overlap with the non-active area, configured to surround a remaining portion excluding the lower end of the active area, and in which both ends are each directly electrically connected to the controller; and a fifth edge electrode pattern extending in the second direction adjacent to the lower end of the active area. In some embodiments, the pen sensing signal induced in the second edge electrode pattern is configured to be transmitted to the first edge electrode pattern by coupling capacitance.

In some embodiments, the at least one edge electrode pattern includes at least one of: a first edge electrode pattern that is arranged so as to overlap with the non-active area and includes a first left edge electrode pattern and a first right edge electrode pattern arranged divided one each adjacent to the left end and the right end of the active area; a second edge electrode pattern extending along the first direction and arranged adjacent to the left end and the right end of the active area, in which the other end of the both ends is electrically connected to the other ends of the plurality of second patterns; a third edge electrode pattern arranged so as to overlap with the non-active area, configured to surround a remaining portion excluding the lower end of the active area, and in which both ends are each directly electrically connected to the controller; and a fifth edge electrode pattern extending in the second direction adjacent to the lower end of the active area. In some embodiments, the pen sensing signal induced in the second edge electrode pattern is configured to be transmitted to the first edge electrode pattern by coupling capacitance.

According to still another aspect of the present disclosure, there is provided a sensor that includes a plurality of electrode patterns arranged so as to overlap with an active area of a display panel, and is controlled by a controller to sense a touch of a conductive object and a pen signal emitted from an external stylus pen. The sensor comprises: a plurality of first electrode patterns overlapping with the active area and extending along a first direction; a plurality of third electrode patterns overlapping with the active area and extending along a second direction crossing the first direction; and at least one edge electrode pattern arranged so as to overlap with a non-active area of the display panel, wherein the first electrode pattern and the third electrode pattern have a double routing wiring structure in which both ends thereof are each directly electrically connected to the controller.

In some embodiments, each of the plurality of first electrode patterns has a shape of '∩', has a bent portion on one side, and both ends are arranged together on the other side.

In some embodiments, the at least one edge electrode pattern includes at least one of: a first edge electrode pattern arranged so as to surround a remaining portion excluding the lower end of the active area, in which at least one or both of the both ends of the first edge electrode pattern are electrically connected to the controller; a third edge electrode pattern arranged closest to the upper end of the active area in the non-active area, and in which both ends are each electrically connected to the controller; and a fifth edge electrode pattern extending in the second direction adjacent to the lower end of the active area.

In some embodiments, the at least one edge electrode pattern includes at least one of: a first edge electrode pattern that is arranged so as to overlap with the non-active area and includes a first left edge electrode pattern and a first right edge electrode pattern arranged divided one each adjacent to the left end and the right end of the active area; a third edge electrode pattern arranged closest to the upper end of the active area in the non-active area, and in which both ends are each electrically connected to the controller; and a fifth edge electrode pattern extending in the second direction adjacent to the lower end of the active area.

According to various embodiments of the present disclosure, there is provided an electronic device comprising: the sensor according to any of the aspects described above; the display panel arranged under the sensor; and a window layer arranged on the sensor, wherein the controller is configured to perform any one of a touch sensing mode, a stylus driving mode, and the stylus sensing mode on the sensor. In some embodiments, the electronic device further comprises a magnetic field shielding layer arranged under the display panel. In some embodiments, the plurality of electrode patterns of the sensor are composed of a metal mesh, and the metal mesh is arranged so as to overlap with a black matrix arranged between pixels of the display panel. In some embodiments, the controller is configured to be integrated into a display driver IC that drives the display panel.

According to an embodiment of the present disclosure, by providing at least one edge electrode pattern in the non-active area NAA, even when the stylus pen approaches the edge of the active area AA, the pen signal can be accurately sensed, so that the sensing performance at the edge portion is dramatically improved.

In addition, by utilizing the double routing structure in which both ends are connected to the controller, the indirect induction electrode is omitted, thereby providing structural advantages of simplifying the wiring and enhancing the sensing efficiency.

### BRIEF DESCRIPTION OF THE FIGURES

FIG. 1 is a diagram for schematically illustrating an electronic device according to an embodiment of the present disclosure.
FIG. 2 is a diagram for illustrating a sensor according to an embodiment of the present disclosure shown in FIG. 1.
FIG. 3 is a modified embodiment of the sensor shown in FIG. 2.
FIG. 4 is another modified embodiment of the sensor shown in FIG. 2.
FIG. 5 is still another modified embodiment of the sensor shown in FIG. 2.
FIG. 6 is still another modified embodiment of the sensor shown in FIG. 2.
FIG. 7 is still another modified embodiment of the sensor shown in FIG. 2.
FIG. 8 is still another modified embodiment of the sensor shown in FIG. 2.

### DETAILED DESCRIPTION

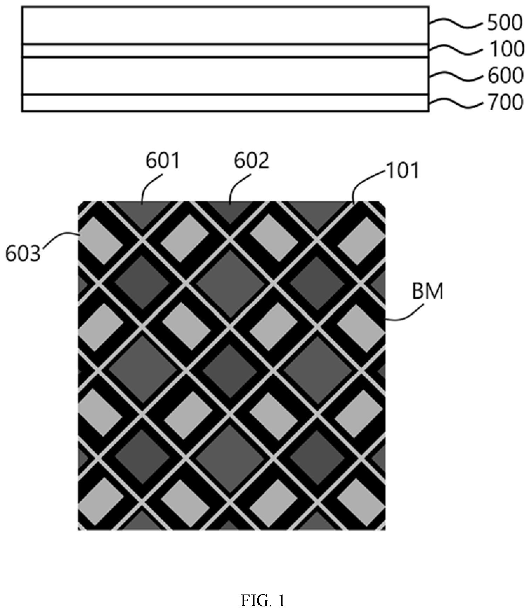

FIG. 1 is a diagram for schematically illustrating an electronic device according to an embodiment of the present disclosure.

Referring to FIG. 1, the electronic device according to the embodiment of the present disclosure may further include a window layer (or cover layer) 500 arranged on a sensor 100 including a plurality of electrode patterns, and a display panel 600 arranged under the sensor 100. The sensor 100 may be arranged between the window layer 500 and the display panel 600. As an example, the sensor 100 may be formed on an upper surface of an encapsulation layer of the display panel 600. In addition, the electronic device may further include a magnetic field shielding layer 700 arranged under the display panel.

As shown in FIG. 1, the plurality of electrode patterns in the sensor 100 may be composed of a metal mesh MM. When the plurality of electrode patterns of the sensor 100 are composed of the metal mesh MM, the metal mesh MM may be arranged so as to overlap with a black matrix BM of the display panel 600. Here, the black matrix BM refers to a black region arranged between pixels 601, 602, 603 of the display panel 600. On the other hand, the plurality of electrode patterns may be formed of various transparent/opaque conductive materials such as ITO (Indium Tin Oxide), Ag nanowire, or conductive polymer, in addition to the metal mesh.

The sensor 100 includes a plurality of electrode patterns, may be controlled by a controller (not shown) to sense a touch such as a finger, may drive an external stylus pen, and may sense a pen signal emitted from an external stylus pen.

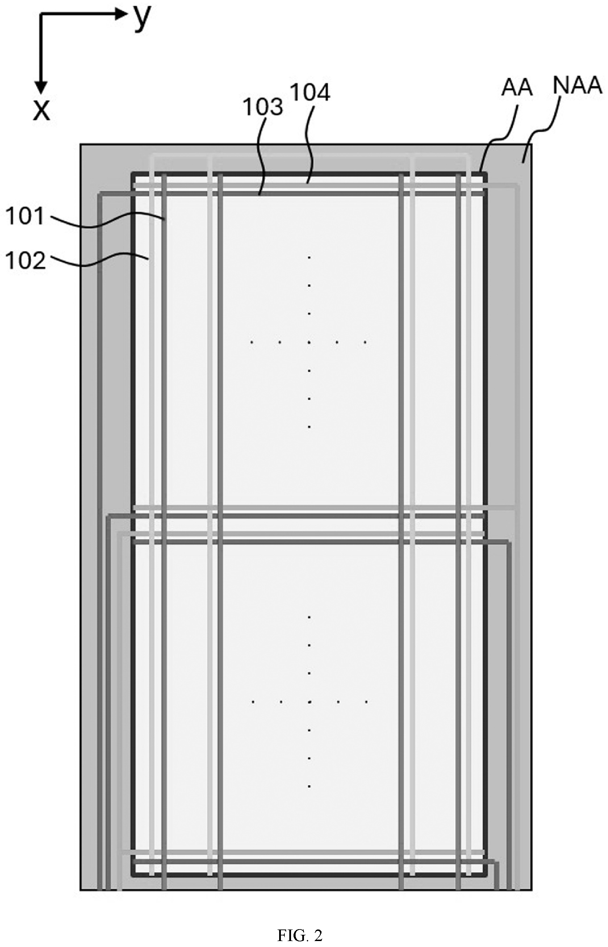

FIG. 2 is a diagram for illustrating an embodiment of the sensor 100 shown in FIG. 1.

The sensor 100 is arranged so as to overlap with the display panel 600 shown in FIG. 1.

The sensor 100 may include at least two or more electrode patterns. More specifically, the sensor 100 may include a plurality of electrode patterns 101, 102, 103, 104. The plurality of electrode patterns 101, 102, 103, 104 may include a first electrode pattern 101, a second electrode pattern 102, a third electrode pattern 103, and a fourth electrode pattern 104.

The first electrode pattern 101 is configured to overlap with the active area AA of the display panel and have a shape extending along the first direction x. Such first electrode patterns 101 are arranged in plurality along the second direction y. The plurality of first electrode patterns 101 are arranged spaced apart from each other by a predetermined distance, and are configured so as not to be electrically connected to each other. Each first electrode pattern 101 has both ends, in which one of the both ends is electrically connected to a controller (not shown), and the other end is electrically floated. Here, the one end of the both ends is arranged relatively closer to the controller (not shown) than the other end.

The second electrode pattern 102 overlaps with the active area AA, has a shape extending along the first direction x, and is arranged adjacent to the first electrode pattern 101. Such second electrode patterns 102 are arranged in plurality along the second direction y. The plurality of second electrode patterns 102 are arranged spaced apart from each other by a predetermined distance. Each second electrode pattern 102 has both ends, in which one of the both ends is electrically floated or electrically connected to the controller (not shown), and the other end is electrically connected to the other end(s) of other second electrode pattern(s) in the non-active area NAA. Here, unlike the drawing, the other end of the second electrode pattern 102 may also be electrically connected to the other end(s) of other second electrode pattern(s) in the active area AA. Here, the one end of the both ends may be arranged relatively closer to the controller (not shown) than the other end. At least three or more of the other ends of the plurality of second electrode patterns 102 are configured to be electrically connected to each other in the non-active area NAA of the display panel.

The third electrode pattern 103 is configured to overlap with the active area AA and have a shape extending along the second direction y. Such third electrode patterns 103 are arranged in plurality along the first direction x. The plurality of third electrode patterns 103 are arranged spaced apart from each other by a predetermined distance, and are configured so as not to be electrically connected to each other. Each third electrode pattern 103 has both ends, in which one of the both ends is electrically connected to the controller (not shown), and the other end is electrically floated. Here, among the plurality of third electrode patterns 103, with respect to an imaginary line extending in the second direction y through the central portion of the active area AA, the one ends of the third electrode patterns arranged above the imaginary line may be configured to be located on the left side, and the one ends of the third electrode patterns arranged below the imaginary line may be configured to be located on the right side. Although not shown in a separate drawing, conversely, the one ends of the third electrode patterns arranged above the imaginary line may be configured to be located on the right side, and the one ends of the third electrode patterns arranged below the imaginary line may be configured to be located on the left side. In addition, the one ends and the other ends of the plurality of third electrode patterns 103 may be arranged alternately one by one along the first direction x.

The fourth electrode pattern 104 overlaps with the active area AA, has a shape extending along the second direction y, and is arranged adjacent to the third electrode pattern 103. Such fourth electrode patterns 104 are arranged in plurality along the first direction x. The plurality of fourth electrode patterns 104 are arranged spaced apart from each other by a predetermined distance. Each fourth electrode pattern 104 has both ends, in which one of the both ends is electrically floated or electrically connected to the controller not shown, and the other end is electrically connected to the other end(s) of other fourth electrode pattern(s) in the non-active area NAA. Here, unlike the drawing, the other end of the fourth electrode pattern 104 may also be electrically connected to the other end(s) of other fourth electrode pattern(s) in the active area AA. At least three or more of the other ends of the plurality of fourth electrode patterns 104 are configured to be electrically connected to each other in the non-active area NAA. At least three or more of the other ends of the plurality of fourth electrode patterns 104 may be electrically connected to each other and electrically connected to the controller (not shown).

Here, among the plurality of fourth electrode patterns 104, with respect to an imaginary line crossing the central portion of the active area AA in the second direction y, the one ends of the fourth electrode patterns arranged above the imaginary line may be configured to be located on the right side, and the one ends of the fourth electrode patterns arranged below the imaginary line may be configured to be located on the left side. Meanwhile, although not shown in a separate drawing, conversely, the one ends of the fourth electrode patterns arranged above the imaginary line may be configured to be located on the left side, and the one ends of the fourth electrode patterns arranged below the imaginary line may be configured to be located on the right side. In addition, the one ends and the other ends of the plurality of fourth electrode patterns 104 may be arranged alternately one by one along the first direction x.

The controller (not shown) may control the sensor 100 to sense a touch such as a conductive object, may drive an external stylus pen, and may sense a pen signal emitted from an external stylus pen. To this end, the controller (not shown) may be configured to perform any one of a touch sensing mode, a stylus driving mode, and a stylus sensing mode. Here, the controller may alternately perform the touch sensing mode and the stylus mode (driving/sensing) on a time-division basis.

### Touch Sensing Mode

The controller (not shown) may apply a touch driving signal to the plurality of first electrode patterns 101 of the sensor 100 and receive a touch sensing signal from the plurality of third electrode patterns 103 to sense the position of the conductive object. Of course, conversely, the touch driving signal may be applied to the plurality of third electrode patterns 103, and the touch sensing signal may be received from the plurality of first electrode patterns 101 to sense the position of the conductive object.

### Stylus Driving Mode

The controller (not shown) may apply a pen driving signal to at least one or more of the plurality of first to fourth electrode patterns 101, 102, 103, 104. The pen driving signal may have a frequency capable of resonating a resonant circuit arranged inside an external stylus pen. The frequency of the pen driving signal may be set differently from the frequency of the touch driving signal.

### Stylus Sensing Mode

The controller (not shown) may receive a pen sensing signal from any one of the plurality of first electrode patterns 101 and the plurality of second electrode patterns 102, and may receive a pen sensing signal from any one of the plurality of third electrode patterns 103 and the plurality of fourth electrode patterns 104. The controller (not shown) may determine the position of the stylus pen based on the received pen sensing signals.

For example, the controller (not shown) may be configured to receive pen sensing signals from the plurality of second electrode patterns 102 and the plurality of fourth electrode patterns 104. In this case, the one ends of the plurality of second electrode patterns 102 and the one ends of the plurality of fourth electrode patterns 104 may be configured to be electrically connected to the controller (not shown).

Alternatively, the controller (not shown) may be configured to receive pen sensing signals from the plurality of first electrode patterns 101 and the plurality of third electrode patterns 103. In this case, the one ends of the plurality of second electrode patterns 102 and the one ends of the plurality of fourth electrode patterns 104 may be configured to be electrically floated.

Alternatively, the controller (not shown) may be configured to receive pen sensing signals from the plurality of first electrode patterns 101 and the plurality of fourth electrode patterns 104. In this case, the one ends of the plurality of second electrode patterns 102 are electrically floated, and the one ends of the plurality of fourth electrode patterns 104 are configured to be electrically connected to the controller (not shown). Alternatively, the controller (not shown) may be configured to receive pen sensing signals from the plurality of second electrode patterns 102 and the plurality of third electrode patterns 103. In this case, the one ends of the plurality of second electrode patterns 102 are electrically connected to the controller (not shown), and the one ends of the plurality of fourth electrode patterns 104 are configured to be floated.

The pen signal emitted from the external stylus pen is induced in some of the second electrode patterns 102 and some of the fourth electrode patterns 104 adjacent to the stylus pen. Since each of the second electrode patterns 102 and the first electrode patterns 101 is arranged adjacent to each other, a coupling capacitance may be formed therebetween. When the one ends of the plurality of second electrode patterns 102 and the plurality of fourth electrode patterns 104 are electrically floated, the pen sensing signal induced in the second electrode pattern 102 may be transmitted to the adjacent first electrode pattern 101 by the coupling capacitance. Similarly, the pen sensing signal induced in the fourth electrode pattern 104 may also be transmitted to the third electrode pattern 103.

As described above, the electronic device including the sensor of FIG. 2 and the controller (not shown) can sense the pen signal emitted from the stylus pen by utilizing the plurality of electrode patterns of the sensor.

Meanwhile, the sensing sensitivity of the pen signal at the edge portion (or edge part) of the active area AA may be relatively lower than that at portions other than the edge of the active area AA (for example, the central portion). This is because the plurality of second electrode patterns 102 or fourth electrode patterns 104 of the sensor are not arranged in the non-active area NAA. Hereinafter, various structures capable of improving the sensing sensitivity of the pen signal even at the edge portion of the active area AA will be described in detail with reference to the accompanying drawings.

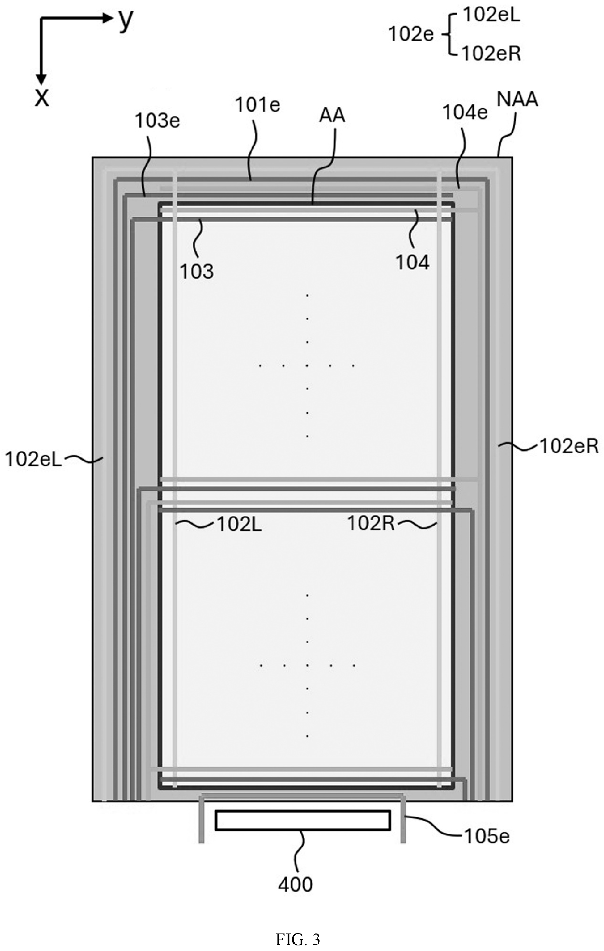

FIG. 3 is a diagram for illustrating a modified embodiment of the sensor shown in FIG. 2, and is a diagram for illustrating a sensor capable of improving the sensing sensitivity of the pen signal at the edge portion of the active area AA.

The sensor according to such an embodiment further includes at least one edge electrode pattern arranged in the non-active area NAA. The sensor including the at least one edge electrode pattern can improve the sensing sensitivity of the pen signal at the edge portion of the active area AA.

In FIG. 3, for simplification, some of the plurality of electrode patterns overlapping with the active area AA are omitted. For the omitted plurality of electrode patterns, please refer to FIG. 2.

Referring to FIG. 3, the at least one edge electrode pattern may include a first edge electrode pattern 101e. The first edge electrode pattern 101e may be arranged to overlap with the non-active area NAA, and may be configured to surround the remaining edge regions (upper end, left end, right end) except for the lower edge of the active area AA. For example, the first edge electrode pattern 101e may have a shape of '∩'. Here, unlike the drawing, the first edge electrode pattern 101e may also be arranged at the lower edge of the active area AA so as to surround most of the edge region of the active area AA.

The first edge electrode pattern 101e has both ends. The configuration may be such that one of the both ends is electrically connected to the controller (not shown), or both of the both ends may be configured to be electrically connected to the controller (not shown), respectively. The portion of the first edge electrode pattern 101e extending along the first direction x is arranged adjacent to the second edge electrode pattern 102e. The first edge electrode pattern 101e can perform the role of the first electrode pattern 101 in the non-active area NAA. The first edge electrode pattern 101e is a structure surrounding the active area AA and constitutes a loop, so that it can sense the pen signal from the stylus pen.

The at least one edge electrode pattern may include a second edge electrode pattern 102e. The second edge electrode pattern 102e is arranged to overlap with the non-active area NAA, and has a shape extending along the first direction x, which is the same direction as the plurality of second electrode patterns 102 in the active area AA. The second edge electrode pattern 102e may include a second left edge electrode pattern 102eL arranged closest to the left end of the active area AA, and a second right edge electrode pattern 102eR arranged closest to the right end of the active area AA. The second left edge electrode pattern 102eL is arranged spaced apart by a predetermined distance from the second electrode pattern 102L arranged closest to the left end of the active area AA among the plurality of second electrode patterns 102, and the second right edge electrode pattern 102eR is arranged spaced apart by a predetermined distance from the second electrode pattern 102R arranged closest to the right end of the active area AA among the plurality of second electrode patterns 102. Here, the predetermined distance may be equal to a separation distance between two second electrode patterns arranged adjacent to each other within the active area AA. The second left edge electrode pattern 102eL has both ends, in which one of the both ends is electrically connected to the controller (not shown) or electrically floated, and the other end is configured to be electrically connected to the other ends of the plurality of second electrode patterns 102 in the active area AA. Similarly, the second right edge electrode pattern 102eR has both ends, in which one of the both ends is electrically connected to the controller (not shown) or electrically floated, and the other end is configured to be electrically connected to the other ends of the plurality of second electrode patterns 102 in the active area AA. The second edge electrode pattern 102e may be arranged outside the first edge electrode pattern 101e surrounding a portion of the active area AA, but is not limited thereto, and may be arranged inside the first edge electrode pattern 101e.

The at least one edge electrode pattern may include a third edge electrode pattern 103e. The third edge electrode pattern 103e is arranged to overlap with the non-active area NAA, and has a shape extending along the second direction y, which is the same direction as the plurality of third electrode patterns 103 in the active area AA. The third edge electrode pattern 103e is arranged spaced apart by a predetermined distance from the third electrode pattern 103 arranged closest to the upper end of the active area AA among the plurality of third electrode patterns 103 arranged in the active area AA. Here, the predetermined distance may be equal to a separation distance between two third electrode patterns arranged adjacent to each other within the active area AA. The third edge electrode pattern 103e has both ends, in which one of the both ends is configured to be electrically connected to the controller (not shown) and the other end is electrically floated.

The at least one edge electrode pattern may include a fourth edge electrode pattern 104e. The fourth edge electrode pattern 104e is arranged to overlap with the non-active area NAA, and has a shape extending along the second direction y, which is the same direction as the plurality of fourth electrode patterns 104 in the active area AA. The fourth edge electrode pattern 104e is arranged spaced apart by a predetermined distance from the fourth electrode pattern 104 arranged closest to the upper end of the active area AA among the plurality of fourth electrode patterns 104 arranged in the active area AA. Here, the predetermined distance may be equal to a separation distance between two fourth electrode patterns arranged adjacent to each other within the active area AA. The fourth edge electrode pattern 104e has both ends, in which one of the both ends is electrically floated or electrically connected to the controller (not shown), and the other end is configured to be electrically connected to the other ends of at least some of the plurality of fourth electrode patterns 104 in the active area AA. The fourth edge electrode pattern 104e is arranged adjacent to the third edge electrode pattern 103e. This is so that the pen sensing signal induced in the fourth edge electrode pattern 104e is transmitted to the third edge electrode pattern 103e by the coupling capacitance.

The at least one edge electrode pattern may include a fifth edge electrode pattern 105e. At least a portion of the fifth edge electrode pattern 105e may be arranged to overlap with the non-active area NAA, and may be configured to extend in the second direction y adjacent to the lower end of the active area AA. The fifth edge electrode pattern 105e may be arranged between the active area AA and the display driver IC (DDI) 400. The fifth edge electrode pattern 105e may be arranged to surround at least a portion of the display driver IC 400. This is, similarly to the other edge electrode patterns, so that when the stylus pen approaches the lower edge portion of the active area AA, the pen signal emitted from the stylus pen is sensed through the fifth edge electrode pattern 105e, thereby effectively improving the pen sensing sensitivity at the lower portion of the active area AA. The fifth edge electrode pattern 105e has both ends, in which the both ends or any one end may be configured to be electrically connected to the controller (not shown). Alternatively, at least one of the both ends may be configured to be electrically floated.

Here, the controller (not shown) may also be integrated into the display driver IC 400.

Since the sensor shown in FIG. 3 further includes at least one edge electrode pattern in the non-active area NAA, in the stylus driving mode of the controller (not shown), the pen driving signal may be applied to the at least one edge electrode pattern to drive the stylus pen located at the edge of the active area AA. In addition, in the stylus sensing mode of the controller (not shown), even when the stylus pen approaches the edge portion of the active area AA, the pen signal emitted from the stylus pen can be sensed, providing the advantage of improving the pen sensing performance at the edge portion of the active area AA.

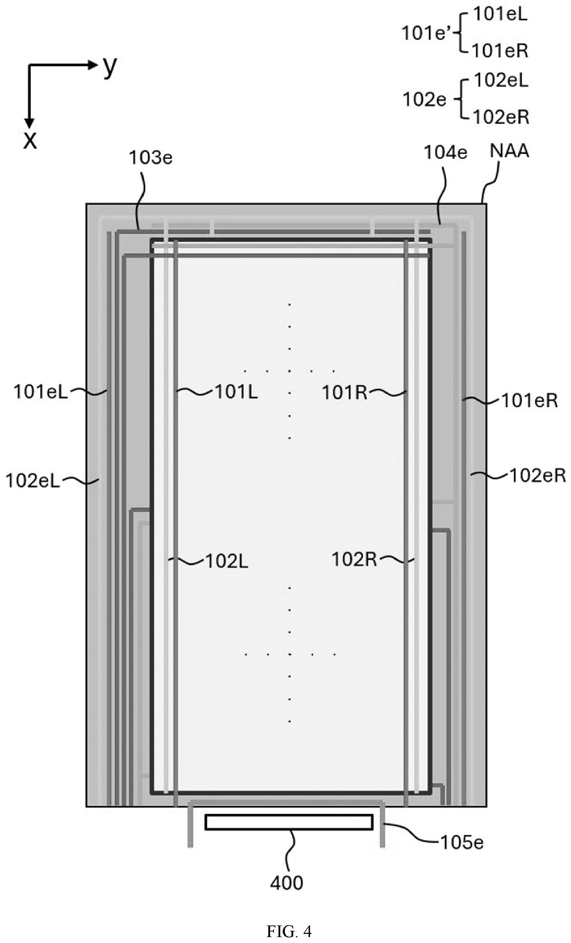

FIG. 4 is a diagram for illustrating another modified embodiment of the sensor shown in FIG. 2, and is a diagram for illustrating another sensor capable of improving the sensing sensitivity of the pen signal at the edge portion of the active area AA.

The sensor according to another embodiment shown in FIG. 4, compared to the sensor according to the embodiment shown in FIG. 3, differs in the first edge electrode pattern 101e', and the rest is the same. Hereinafter, the first edge electrode pattern 101e' will be described in detail. Schematically, the first edge electrode pattern 101e of FIG. 3 has a '∩' shape, whereas the first edge electrode pattern 101e' of FIG. 4 differs in that one is arranged on each of the left side and the right side of the non-active area NAA.

More specifically, the first edge electrode pattern 101e' is arranged to overlap with the non-active area NAA, and has a shape extending along the first direction x, which is the same direction as the plurality of first electrode patterns 101 in the active area AA. The first edge electrode pattern 101e' includes a first left edge electrode pattern 101eL arranged adjacent to the left end of the active area AA, and a first right edge electrode pattern 101eR arranged adjacent to the right end of the active area AA. The first left edge electrode pattern 101eL is arranged spaced apart by a predetermined distance from the first electrode pattern 101L arranged closest to the left end of the active area AA among the plurality of first electrode patterns 101, and the first right edge electrode pattern 101eR is arranged spaced apart by a predetermined distance from the first electrode pattern 101R arranged closest to the right end of the active area AA among the plurality of first electrode patterns 101. Here, the predetermined distance may be equal to a separation distance between two first electrode patterns arranged adjacent to each other within the active area AA. The first left edge electrode pattern 101eL has both ends, in which one of the both ends is electrically connected to the controller (not shown), and the other end is configured to be electrically floated. Similarly, the first right edge electrode pattern 101eR has both ends, in which one of the both ends is electrically connected to the controller (not shown), and the other end is configured to be electrically floated.

The first left edge electrode pattern 101eL can receive, through coupling capacitance, the pen sensing signal induced in the second left edge electrode pattern 102eL arranged adjacent thereto, and the first right edge electrode pattern 101eR can receive, through coupling capacitance, the pen sensing signal induced in the second right edge electrode pattern 102eR arranged adjacent thereto.

Since the sensor shown in FIG. 4 also further includes at least one edge electrode pattern in the non-active area NAA, in the stylus driving mode of the controller (not shown), the pen driving signal may be applied to the at least one edge electrode pattern to drive the stylus pen located at the edge of the active area AA. In addition, in the stylus sensing mode of the controller (not shown), even when the stylus pen approaches the edge portion of the active area AA, the pen signal emitted from the stylus pen can be sensed, providing the advantage of improving the pen sensing performance at the edge portion of the active area AA.

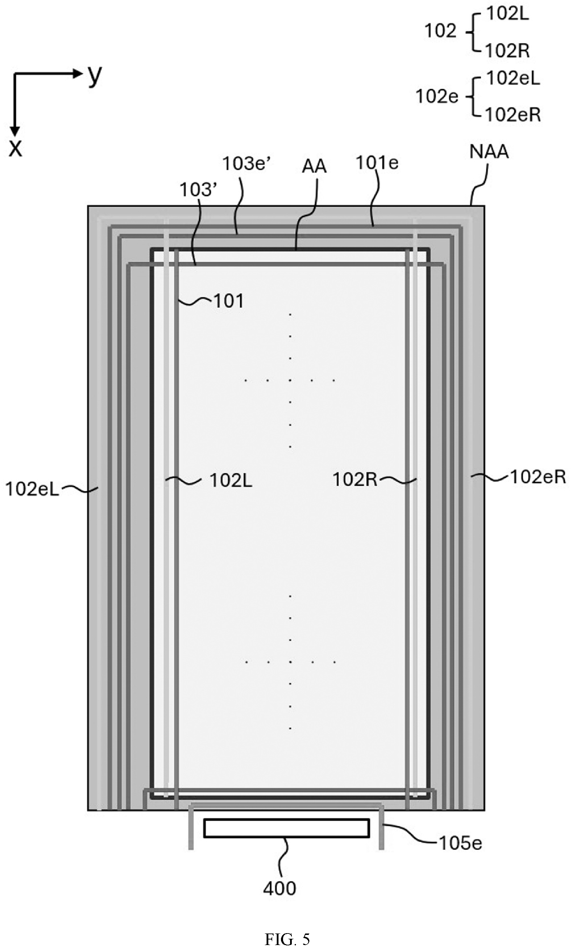

FIG. 5 is a diagram for illustrating still another modified embodiment of the sensor shown in FIG. 2.

Referring to FIG. 5, the sensor according to another embodiment of the present disclosure may include a plurality of first electrode patterns 101, second electrode patterns 102, and third electrode patterns 103' arranged so as to overlap with the active area AA of the display panel 600. The plurality of first electrode patterns 101 and second electrode patterns 102 have a shape extending along the first direction x, the same as in FIG. 2, and are configured to be arranged in plurality adjacent to each other.

In the case of the sensor according to the embodiment described above with reference to FIG. 2, it is configured to include the third electrode pattern 103 extending along the second direction y and the fourth electrode pattern 104 arranged adjacent thereto. However, the sensor according to the modified embodiment shown in FIG. 5 has a configuration in which the fourth electrode pattern 104 is omitted as compared to the structure of FIG. 2, and only the third electrode pattern 103' is arranged along the second direction y.

The sensor according to another embodiment of the present disclosure shown in FIG. 5 may include the first edge electrode pattern 101e shown in FIG. 3. A detailed description thereof is described in the description of FIG. 3, and thus is omitted.

The sensor according to another embodiment of the present disclosure shown in FIG. 5 may include the second edge electrode pattern 102e shown in FIG. 3. A detailed description thereof is described in the description of FIG. 3, and thus is omitted.

The sensor according to another embodiment of the present disclosure shown in FIG. 5 includes a third pattern 103'. In the embodiment of FIG. 2, the third electrode pattern 103 has both ends, in which only one of the both ends is electrically connected to the controller (not shown), and the other end is configured to be electrically floated. On the other hand, the third electrode pattern 103' shown in FIG. 5 has a double routing wiring structure in which both ends thereof are each directly electrically connected to the controller (not shown).

The sensor according to another embodiment of the present disclosure shown in FIG. 5 may include a third edge electrode pattern 103e'. The third edge electrode pattern 103e' is arranged to overlap with the non-active area NAA, and is configured to surround the remainder (upper end, left end, right end) except for the lower end of the active area AA. Such a third edge electrode pattern 103e' may have a shape of '∩'. The third edge electrode pattern 103e' may be arranged to be surrounded by the first edge electrode pattern 101e.

The third edge electrode pattern 103e' is arranged spaced apart by a predetermined distance from the third electrode pattern 103' arranged closest to the upper end of the active area AA among the plurality of third electrode patterns 103' arranged in the active area AA. Here, the predetermined distance may be equal to a separation distance between two third electrode patterns arranged adjacent to each other within the active area AA. The third edge electrode pattern 103e' has both ends, the same as the third pattern 103', and the configuration may also be such that both of the both ends are electrically connected to the controller (not shown).

The sensor according to another embodiment of the present disclosure shown in FIG. 5 may include the fifth edge electrode pattern 105e shown in FIG. 3. A detailed description thereof is described in the description of FIG. 3, and thus is omitted.

The controller (not shown) can control the sensor of such a modified structure to sense the position of the conductive object, may drive an external stylus pen, or may receive a pen sensing signal emitted from the stylus pen. To this end, the controller (not shown) may be configured to perform any one of a touch sensing mode, a stylus driving mode, and a stylus sensing mode. Here, the controller may alternately perform the touch sensing mode and the stylus mode (driving/sensing) on a time-division basis.

### Touch Sensing Mode

The controller (not shown) may apply a touch driving signal to the plurality of first electrode patterns 101 of the sensor and receive a touch sensing signal from the plurality of third electrode patterns 103' to sense the position of the conductive object. Of course, conversely, the touch driving signal may be applied to the plurality of third electrode patterns 103', and the touch sensing signal may be received from the plurality of first electrode patterns 101 to sense the position of the conductive object.

### Stylus Driving Mode

The controller (not shown) may apply a pen driving signal to at least one or more of the plurality of first to third electrode patterns 101, 102, 103'. In addition, the controller (not shown) may also apply the pen driving signal to at least one of the second edge electrode pattern 102e, the third edge electrode pattern 103e, and the fifth edge electrode pattern 105e.

### Stylus Sensing Mode

The controller (not shown) may receive a pen sensing signal from any one of the plurality of first electrode patterns 101 and the plurality of second electrode patterns 102, and may receive a pen sensing signal from the plurality of third electrode patterns 103'. The controller (not shown) may sense the position of the stylus pen based on the received pen sensing signals.

For example, the controller (not shown) may be configured to receive pen sensing signals from the plurality of first electrode patterns 101 and the plurality of third electrode patterns 103'. In this case, the one ends of the plurality of second electrode patterns 102 may be configured to be electrically floated. The pen signal emitted from the external stylus pen is induced in some of the second electrode patterns 102 adjacent to the stylus pen. Since each of the second electrode patterns 102 and the first electrode patterns 101 is arranged adjacent to each other, a coupling capacitance may be formed therebetween. When the one ends of the plurality of second electrode patterns 102 are electrically floated, the pen sensing signal induced in the second electrode pattern 102 may be transmitted to the adjacent first electrode pattern 101 by the coupling capacitance.

Alternatively, the controller (not shown) may be configured to receive pen sensing signals from the plurality of second electrode patterns 102 and the plurality of third electrode patterns 103'. In this case, the one ends of the plurality of second electrode patterns 102 may be configured to be electrically connected to the controller (not shown).

In particular, as the fourth electrode pattern 104 is omitted, the structure differs from the indirect reception method in the structure of FIG. 2, in which the pen signal of the external stylus pen is induced in the fourth electrode pattern 104 and then transmitted to the third electrode pattern 103 through the coupling capacitance. The sensor of FIG. 5, in sensing the position of the stylus pen in the first direction x, cannot utilize the coupling capacitance because the plurality of fourth patterns do not exist. Accordingly, the controller (not shown) may receive the pen sensing signal directly induced in the plurality of third patterns 103' and the third edge electrode pattern 103e' to sense the position of the stylus pen in the first direction x.

In the embodiment of FIG. 5, the signal can be transmitted and received to the controller (not shown) through the connected both ends of the third electrode pattern 103' and the third edge electrode pattern 103e' having the double routing structure, so that the internal structure of the sensor can be simplified, and at the same time, structural changes can be brought to the touch and pen driving/sensing efficiency. In addition, by omitting the indirect induction electrodes such as the plurality of fourth electrode patterns of FIG. 2, the parasitic capacitance and RC delay unnecessarily formed in the sensor can be reduced, so that the response speed can be maximized.

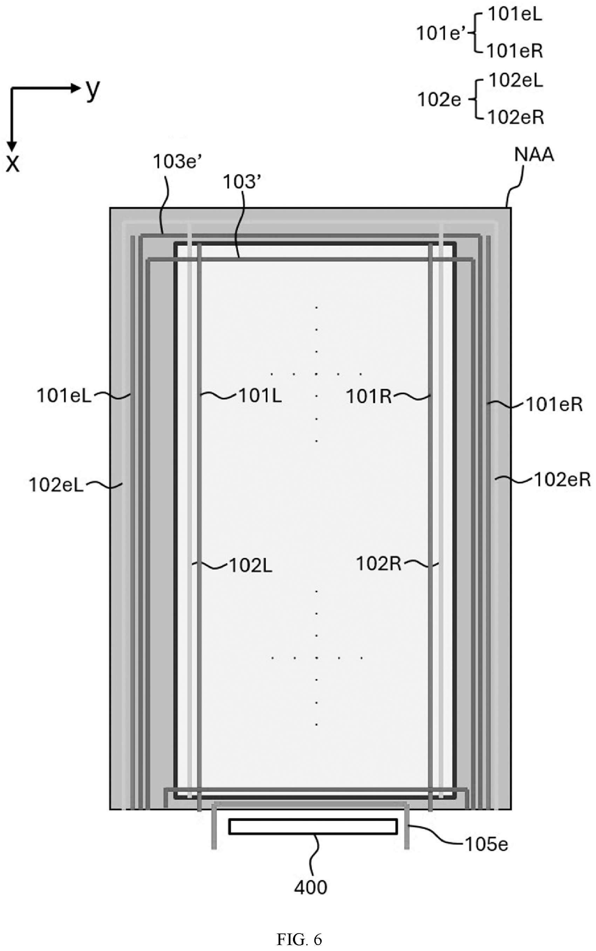

FIG. 6 is a diagram for illustrating still another modified embodiment of the sensor shown in FIG. 2.

The sensor shown in FIG. 6, compared to the sensor shown in FIG. 5, differs in the first edge electrode pattern 101e', and the rest is the same. Hereinafter, the first edge electrode pattern 101e' will be described in detail. Schematically, the first edge electrode pattern 101e of FIG. 5 has a '∩' shape, whereas the first edge electrode pattern 101e' of FIG. 6 differs in that one is arranged on each of the left side and the right side of the non-active area NAA.

More specifically, the first edge electrode pattern 101e' is arranged to overlap with the non-active area NAA, and has a shape extending along the first direction x, which is the same direction as the plurality of first electrode patterns 101 in the active area AA. The first edge electrode pattern 101e' includes a first left edge electrode pattern 101eL arranged adjacent to the left end of the active area AA, and a first right edge electrode pattern 101eR arranged adjacent to the right end of the active area AA. The first left edge electrode pattern 101eL is arranged spaced apart by a predetermined distance from the first electrode pattern 101L arranged closest to the left end of the active area AA among the plurality of first electrode patterns 101, and the first right edge electrode pattern 101eR is arranged spaced apart by a predetermined distance from the first electrode pattern 101R arranged closest to the right end of the active area AA among the plurality of first electrode patterns 101. Here, the predetermined distance may be equal to a separation distance between two first electrode patterns arranged adjacent to each other within the active area AA. The first left edge electrode pattern 101eL has both ends, in which one of the both ends is electrically connected to the controller (not shown), and the other end is configured to be electrically floated. Similarly, the first right edge electrode pattern 101eR has both ends, in which one of the both ends is electrically connected to the controller (not shown), and the other end is configured to be electrically floated.

The first left edge electrode pattern 101eL can receive, through coupling capacitance, the pen sensing signal induced in the second left edge electrode pattern 102eL arranged adjacent thereto, and the first right edge electrode pattern 101eR can receive, through coupling capacitance, the pen sensing signal induced in the second right edge electrode pattern 102eR arranged adjacent thereto.

Since the sensor shown in FIG. 6 also further includes at least one edge electrode pattern in the non-active area NAA, in the stylus driving mode of the controller (not shown), the pen driving signal may be applied to the at least one edge electrode pattern to drive the stylus pen located at the edge of the active area AA. In addition, in the stylus sensing mode of the controller (not shown), even when the stylus pen approaches the edge portion of the active area AA, the pen signal emitted from the stylus pen can be sensed, providing the advantage of improving the pen sensing performance at the edge portion of the active area AA.

In addition, similarly to the embodiment of FIG. 5, the signal can be transmitted and received to the controller (not shown) through the connected both ends of the third electrode pattern 103' and the third edge electrode pattern 103e' having the double routing structure, so that the internal structure of the sensor can be simplified, and at the same time, structural changes can be brought to the touch and pen driving/sensing efficiency.

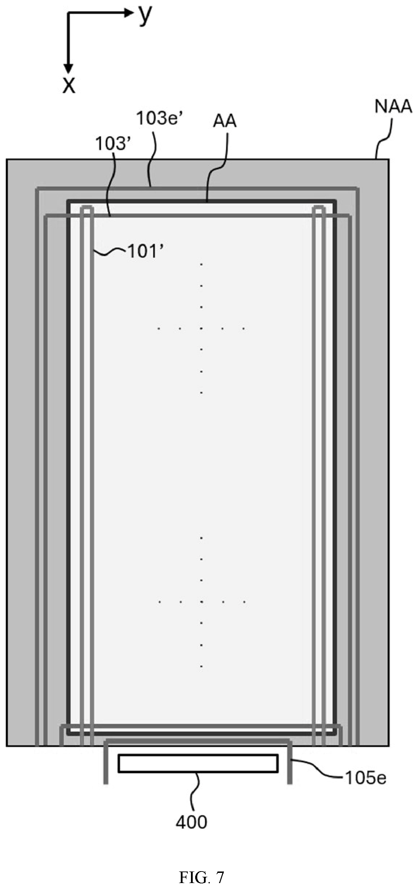

FIG. 7 is a diagram for illustrating still another modified embodiment of the sensor shown in FIG. 2.

Referring to FIG. 7, the sensor according to still another embodiment of the present disclosure may include a plurality of first electrode patterns 101' and third electrode patterns 103' arranged so as to overlap with the active area AA of the display panel 600.

The plurality of first electrode patterns 101' extend along the first direction x, the same as in FIG. 2, but differ in the specific shape. Each first electrode pattern 101' has a shape of '∩'. Both ends of the first electrode pattern 101' are arranged together on one side, and the other side has a bent portion (bending portion). In order to prevent the bent portion from adversely affecting the visibility of the display panel, the bent portion (bending portion) of the first electrode pattern 101' may be positioned on the black matrix BM of the display panel, or arranged adjacent to the non-active area NAA.

Both ends of the first electrode pattern 101' are arranged on the controller (not shown) side and are electrically connected to the controller (not shown). The both ends of the first electrode pattern 101' may be electrically connected to or separated from each other by the controller (not shown). The plurality of first electrode patterns 101' are configured to be arranged in plurality adjacent to each other along the second direction y.

The sensor shown in FIG. 7 has a configuration in which, compared to the structure of FIG. 2, the second electrode pattern 102 and the fourth electrode pattern 104 are omitted, only the first electrode pattern 101' is arranged along the first direction x, and only the third electrode pattern 103' of FIG. 5 is arranged along the second direction y.

The sensor according to still another embodiment of the present disclosure shown in FIG. 7 includes a third pattern 103'. The third electrode pattern 103', as in FIG. 5, has a double routing wiring structure in which both ends thereof are each directly electrically connected to the controller (not shown).

The sensor according to still another embodiment of the present disclosure shown in FIG. 7 may include the third edge electrode pattern 103e' shown in FIG. 5. A detailed description thereof is described in the description of FIG. 5, and thus is omitted.

The sensor according to another embodiment of the present disclosure shown in FIG. 7 may include the fifth edge electrode pattern 105e. A detailed description thereof is described in the description of FIG. 3, and thus is omitted.

The controller (not shown) can control the sensor of such a modified structure to sense the position of the conductive object, may drive an external stylus pen, or may receive a pen sensing signal emitted from the stylus pen. In particular, as compared to FIG. 2, since the second electrode pattern 102 and the fourth electrode pattern 104 are omitted, the indirect reception method through the coupling capacitance used in the structure of FIG. 2 is not used. The sensor of FIG. 7, in sensing the position of the stylus pen in the second direction y, does not use the coupling capacitance, and may use the pen sensing signal directly induced through the plurality of first electrode patterns 101'. In addition, in sensing the position of the stylus pen in the first direction x, the pen sensing signal directly induced through the plurality of third patterns 103' and the third edge electrode pattern 103e' may be used.

More specifically, the electronic device shown in FIG. 7 can detect whether an object is touched and the touch position using the double routing wiring structure, and can detect the position of the stylus pen by driving the stylus pen and/or sensing the pen signal from the stylus pen. To this end, the controller (not shown) may be configured to perform any one of a touch sensing mode, a stylus driving mode, and a stylus sensing mode. Here, the controller may alternately perform the touch sensing mode and the stylus mode (driving/sensing) on a time-division basis.

### Touch Sensing Mode

The controller (not shown) may perform a touch sensing operation by sensing a change in capacitance between the plurality of third electrode patterns 103' and the plurality of first electrode patterns 101'. The controller (not shown) may control the other end of the both ends of each third electrode pattern 103' to be electrically floated. Alternatively, the controller (not shown) may control the both ends of each third electrode pattern 103' to be electrically connected to each other so that the same touch driving signal is applied to the both ends of each third electrode pattern 103'. In addition, the controller (not shown) may electrically connect or electrically separate the both ends of each third electrode pattern 103' to or from each other by controlling a switch unit (not shown). Similarly, the controller (not shown) may electrically connect the both ends of each first electrode pattern 101' to receive a touch sensing signal, and may electrically connect or separate the both ends of each first electrode pattern 101' by controlling the switch unit (not shown). As necessary, the other end of the both ends of each first electrode pattern 101' may be controlled to be floated, or controlled so that the same touch driving signal is applied to the both ends.

### Stylus Driving Mode

The controller (not shown) may control the both ends of each third electrode pattern 103', third edge electrode pattern 103e', and fifth edge electrode pattern 105e so that a predetermined current flows through each of the third electrode pattern 103', third edge electrode pattern 103e', and fifth edge electrode pattern 105e. For example, the pen driving signal may be applied to one end of one third electrode pattern 103' while the other end of the corresponding third electrode pattern 103' may be controlled to be grounded or to which an inverse signal of the pen driving signal is applied.

In addition, in order to apply the pen driving signal to each first electrode pattern 101', the controller (not shown) may be configured to electrically separate the both ends of each first electrode pattern 101' and apply the pen driving signal to at least one end of the both ends. For example, the other end of the first electrode pattern 101' may be electrically grounded, or may be configured so that a signal having the same magnitude as the pen driving signal and an opposite phase is applied. Furthermore, the controller (not shown) may control the pen driving signal to be simultaneously applied to at least one or more of the plurality of first electrode patterns 101', the plurality of third electrode patterns 103', the third edge electrode pattern 103e', and the fifth edge electrode pattern 105e, so that the magnetic field is formed relatively largely at a specific position on the sensor.

### Stylus Sensing Mode

The controller (not shown) may control the both ends of each third electrode pattern 103' and the third edge electrode pattern 103e' arranged in the non-active area NAA so that a current or voltage signal by the pen signal is directly induced. The controller (not shown) may differentially process two pen sensing signals respectively provided from the both ends of each third electrode pattern 103' to remove noise and improve the signal-to-noise ratio (SNR), thereby sensing the position of the pen on the first direction (x-axis). In particular, when the stylus pen approaches the edge portion such as the upper end of the active area AA, the controller (not shown) may receive and use the pen sensing signal directly induced through the third edge electrode pattern 103e', both ends of which are electrically connected, without using the coupling capacitance. Through this, it is possible to effectively compensate for the deterioration of the pen sensing sensitivity in the first direction (x-axis) at the edge portion, and to perform precise position detection.

In addition, the controller (not shown) may control the both ends of each first electrode pattern 101' so that a current or voltage signal by the pen signal is induced. The controller (not shown) may differentially process two pen sensing signals respectively provided from the both ends of each first electrode pattern 101' to precisely sense the position of the pen on the second direction (y-axis). Alternatively, one of the both ends of the first electrode pattern 101' may be electrically grounded, and the pen sensing signal may be received only from the other end to sense the position of the pen.

As described above, in the embodiment of FIG. 7, the signal can be transmitted and received to the controller (not shown) through the connected both ends of the plurality of first electrode patterns 101', the connected both ends of the third electrode pattern 103' and the third edge electrode pattern 103e', and the both ends of the fifth edge electrode pattern 105e, all having the double routing structure, so that the internal structure of the sensor can be simplified, and at the same time, structural changes can be brought to the touch and pen driving/sensing efficiency. In addition, by omitting the indirect induction electrodes such as the plurality of second electrode patterns and the plurality of fourth electrode patterns of FIG. 2, the parasitic capacitance and RC delay unnecessarily formed in the sensor can be reduced, so that the response speed can be maximized.

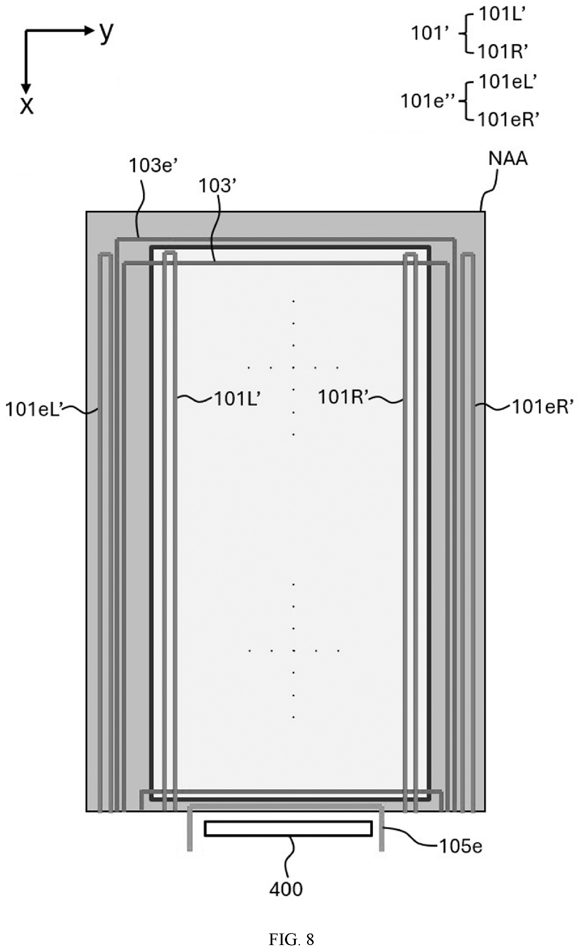

FIG. 8 is a diagram for illustrating still another modified embodiment of the sensor shown in FIG. 2.

The sensor shown in FIG. 8, compared to the sensor shown in FIG. 7, differs in the first edge electrode pattern 101e", and the rest is the same. Hereinafter, the first edge electrode pattern 101e" will be described in detail. Schematically, the first edge electrode pattern 101e of FIG. 7 has a '∩' shape, whereas the first edge electrode pattern 101e" of FIG. 8 differs in that one is arranged on each of the left side and the right side of the non-active area NAA.

The first edge electrode pattern 101e" is arranged to overlap with the non-active area NAA, extends along the first direction x, which is the same direction as the plurality of first electrode patterns 101' in the active area AA, and has the same shape. The first edge electrode pattern 101e" includes a first left edge electrode pattern 101eL' arranged adjacent to the left end of the active area AA, and a first right edge electrode pattern 101eR' arranged adjacent to the right end of the active area AA. The first left edge electrode pattern 101eL' is arranged spaced apart by a predetermined distance from the first electrode pattern 101L' arranged closest to the left end of the active area AA among the plurality of first electrode patterns 101', and the first right edge electrode pattern 101eR' is arranged spaced apart by a predetermined distance from the first electrode pattern 101R' arranged closest to the right end of the active area AA among the plurality of first electrode patterns 101'. Here, the predetermined distance may be equal to a separation distance between two first electrode patterns arranged adjacent to each other within the active area AA. The first left edge electrode pattern 101eL' has both ends, in which the both ends are configured to be electrically connected to the controller (not shown), respectively. Similarly, the first right edge electrode pattern 101eR' has both ends, in which the both ends are configured to be electrically connected to the controller (not shown), respectively.

The sensor of FIG. 8, in sensing the position of the stylus pen in the second direction y, does not use the coupling capacitance, and may use the pen sensing signal directly induced through the plurality of first electrode patterns 101' and the first edge pattern 101 e". In addition, in sensing the position of the stylus pen in the first direction x, the pen sensing signal directly induced through the plurality of third patterns 103' and the third edge electrode pattern 103e' may be used.

In the embodiment of FIG. 8, the signal can be transmitted and received to the controller (not shown) through the connected both ends of the plurality of first electrode patterns 101' and the first edge pattern 101e having the double routing structure, the connected both ends of the third electrode pattern 103' and the third edge electrode pattern 103e', and the both ends of the fifth edge electrode pattern 105e, so that the internal structure of the sensor can be simplified, and at the same time, structural changes can be brought to the touch and pen driving/sensing efficiency.

## Claims

1. A sensor (100) including a plurality of electrode patterns arranged so as to overlap with an active area (AA) of a display panel (600), and controlled by a controller to sense a touch of a conductive object and a pen signal emitted from an external stylus pen, the sensor (100) comprising:
a first electrode pattern (101, 101') overlapping with the active area (AA) and extending along a first direction (x); and
a third electrode pattern (103, 103') overlapping with the active area (AA) and extending along a second direction (y) crossing the first direction (x);
**characterized in that** the sensor (100) further comprises: at least one or more edge electrode patterns (101e, 102e, 103e, 104e, 105e) arranged so as to overlap with a non-active area (NAA) of the display panel (600) and formed adjacent to an edge of the active area (AA).

2. The sensor (100) according to claim 1, further comprising a second electrode pattern (102) arranged adjacent to the first electrode pattern (101).

3. The sensor (100) according to claim 1 or 2, further comprising a fourth electrode pattern (104) arranged adjacent to the third electrode pattern (103).

4. The sensor (100) according to any one of claims 1 to 3, wherein the third electrode pattern (103') has a double routing wiring structure in which both ends thereof are each directly electrically connected to the controller.

5. The sensor (100) according to any one of claims 1 to 4, wherein the first electrode pattern (101') has a double routing wiring structure in which both ends thereof are each directly electrically connected to the controller.

6. The sensor (100) according to any one of claims 1 to 5, wherein the at least one or more edge electrode patterns include a first edge electrode pattern (101e) arranged so as to overlap with the non-active area (NAA) and configured to surround a remaining portion excluding a lower end of the active area (AA).

7. The sensor (100) according to any one of claims 1 to 5, wherein the at least one or more edge electrode patterns include a first edge electrode pattern (101e') that is arranged so as to overlap with the non-active area (NAA) and includes a first left edge electrode pattern (101eL) and a first right edge electrode pattern (101eR) arranged adjacent to a left end and a right end of the active area (AA), respectively.

8. The sensor (100) according to claim 2, or any one of claims 3 to 7 when dependent on claim 2, wherein the at least one or more edge electrode patterns include a second edge electrode pattern (102e) extending along the first direction (x) and arranged adjacent to a left end and a right end of the active area (AA), and wherein an end of the second edge electrode pattern (102e) is electrically connected to an end of the second electrode pattern (102).

9. The sensor (100) according to any one of claims 1 to 8, wherein the at least one or more edge electrode patterns include: a third edge electrode pattern (103e, 103e') extending along the second direction (y) and arranged adjacent to an upper end of the active area (AA); and a fourth edge electrode pattern (104e) extending along the second direction (y) and arranged adjacent to the third edge electrode pattern (103e).

10. The sensor (100) according to any one of claims 1 to 9, wherein the at least one or more edge electrode patterns include a fifth edge electrode pattern (105e) extending in the second direction (y) adjacent to a lower end of the active area (AA).

11. The sensor (100) according to any one of claims 8 to 10, wherein a pen sensing signal induced in the second edge electrode pattern (102e) is configured to be transmitted to the first edge electrode pattern (101e, 101e') by a coupling capacitance, and/or a pen sensing signal induced in the fourth edge electrode pattern (104e) is configured to be transmitted to the third edge electrode pattern (103e) by a coupling capacitance.

12. An electronic device comprising: the sensor (100) according to any one of claims 1 to 11; the display panel (600) arranged under the sensor (100); and a window layer (500) arranged on the sensor (100), wherein the controller is configured to perform any one of a touch sensing mode, a stylus driving mode, and a stylus sensing mode on the sensor (100).

13. The electronic device according to claim 12, further comprising a magnetic field shielding layer (700) arranged under the display panel (600).

14. The electronic device according to claim 12 or 13, wherein the plurality of electrode patterns of the sensor (100) are composed of a metal mesh (MM), and the metal mesh (MM) is arranged so as to overlap with a black matrix (BM) arranged between pixels (601, 602, 603) of the display panel (600).

15. The electronic device according to any one of claims 12 to 14, wherein the controller is configured to be integrated into a display driver IC (400) that drives the display panel (600).
